# EUROPÄISCHE PATENTSCHRIFT

(11) **EP 1 527 469 B1**
(45) Veröffentlichungstag und Bekanntmachung des Hinweises auf die Patenterteilung: **01.03.2006**
(21) Anmeldenummer: 03792168.1
(22) Anmeldetag: 01.07.2003
(51) Int. Cl.: H01H 36/00, H03K 17/97

(54) **DREHWÄHLER**
ROTARY SWITCH
COMMUTATEUR ROTATIF

(30) Priorität: 31.07.2002 DE 10234925
(43) Veröffentlichungstag der Anmeldung: 04.05.2005
(73) Patentinhaber: BSH Bosch und Siemens Hausgeräte GmbH, 81669 München (DE)
(72) Erfinder: DIETRICH, Mike, 15848 Bornow (DE); KALTOFEN, Thomas, 12623 Berlin (DE); LAMPRECHT, Michael, 13589 Berlin (DE)
(86) Internationale Anmeldenummer: PCT/EP2003/007016
(87) Internationale Veröffentlichungsnummer: WO 2004/019359

(56) Entgegenhaltungen:
- EP-A- 0 600 780
- WO-A-98/48435
- US-B1- 6 188 332

## Beschreibung

Die Erfindung betrifft einen Drehwähler als Bedienungseinrichtung für eine kontaktfreie Ein- und Ausschaltung sowie für die Schaltung der automatischen Steuerung einer Anzahl unterschiedlicher Programmabläufe von elektrisch betriebenen Hausgeräten, wie Waschmaschinen, Wäschetrocknern, Geschirrspülern oder vergleichbaren Anlagen.

Drehwähler der genannten Art sind an den betreffenden Geräten üblicherweise an einer für einen Nutzer geeigneten Position, beispielsweise an der Frontseite durch entsprechende Mittel befestigt, vorgesehen und dienen sowohl der manuellen Energiezu- und abschaltung als auch der Steuerung von Arbeitsprogrammen für das jeweilige Gerät.

Durch definiertes Drehen der Schaltwelle mittels entsprechenden Bedienteiles am Drehwähler und nach Einschaltung der Energiezuführung wird eine nach vorgegebenen Kriterien festgelegte, automatische Programmsteuerung aktiviert.

Dazu wird eine mit der Schaltwelle verbundene Magneteinrichtung gegenüber einem abstandsweise fixierten Drehfeldsensor nach der Hall-Technologie definiert gedreht, worauf die Steuerung entsprechender Baugruppen hinsichtlich einer vorgegebenen Anzahl, der Art sowie die Dauer von vorgegebenen Programmabläufen in den genannten Geräten eingeleitet wird.

Verschiedenen Winkelstellungen der Magneteinrichtung gegenüber dem Drehfeldsensor sind auf diese Weise verschiedenste Programmabläufe zugeordnet, die über den Drehwähler beliebig vorgewählt und anschließend vom Gerät automatisch abgearbeitet werden.

Durch ihre lediglich im Bereich der Drehlagerung der Schaltwelle geringfügige Reibung arbeiten diese Drehwähler quasi reibungslos und darüber hinaus kontaktfrei, wodurch eine hohe Lebensdauer erzielt wird. Außerdem sind diese Drehwähler aufgrund verwendeter Bauteile und Bauelemente für hohe Arbeitsbereichstemperaturen einsetzbar.

Durch die Drehung der Magneteinrichtung gegenüber dem Drehfeldsensor ist es beispielsweise möglich, auf den Umfang einer Umdrehung des Magneten von 3 60° bezogen, bis zu 256 verschiedene Schaltstellungen zu induzieren, die zur Steuerung jeglicher Programmfunktionen in Geräten der eingangs genannten Art einsetzbar sind.

Die Drehwähler der vorgenannten Art haben jedoch den Nachteil, dass diese selbst und darüber hinaus in den jeweiligen Geräten aufwändig zu montieren und zu justieren sind. Außerdem sind die unterschiedlichen Schaltstellungen der Schaltwelle des Drehwählers nicht exakt reproduzierbar. In der Patentanmeldung EP-A-0 600 780 wird ein Drehwähler gemäß dem Oberbegriff des Patentanspruchs 1 offenbart.

Der Erfindung liegt die Aufgabe zugrunde, einen Drehwähler für die Programmsteuerung von Hausgeräten zu schaffen, der sich exakt schalten lässt und der darüber hinaus selbst und in den jeweiligen Geräten einfach zu montieren ist.

Diese Aufgabe wird, wie in Anspruch 1 angeben, gelöst. Vorteilhafte Ausgestaltungen und Weiterentwicklungen der Erfindung sind in zugehörigen Unteransprüchen beschrieben.

Mit der Erfindung wird in vorteilhafter Weise erreicht, dass die Montage des Drehwählers vereinfacht sowie seine Funktion durch eine exakt vorgebbare Position eines gewählten Programmschrittes oder auch eines vollständigen Programmes verbessert wird. Darüber hinaus werden die Kosten durch Vereinfachung der Montage in den jeweiligen Geräten verringert.

Der Drehwähler gemäß der Erfindung weist gegenüber den eingangs genannten Lösungen eine geringere Baugröße auf, wodurch der Platzbedarf im entsprechenden Gerät, beispielsweise in einem Waschautomaten, verringert wird. Darüber hinaus lassen sich Variationen von Programmstellungen oder Änderungen der Rastkontur bei gleichbleibendem Drehwähler in einfacher Weise einrichten, wodurch auf Kundenwünsche besser reagiert werden kann.

Die durch das Stecksystem axial miteinander zusammengefügten Baugruppen - drehbares Bedienteil, Führungsteil und Platine - des erfindungsgemäßen Drehwählers ermöglichen in vorteilhafter Weise außerdem ihren problemlosen Austausch, beispielsweise bei erforderlicher Reparatur oder Wartung, wodurch die Reparaturzeit und Aufwendungen für die Fehleranalyse verringert werden.

Der Drehwähler gemäß der vorliegenden Erfindung ist ebenso wie die bisherigen Lösungen wärmeunempfindlich und daher problemlos bis zu einem Arbeitstemperaturbereich von etwa 120°C einsetzbar.

Die gemäß einer ersten und zweiten Weiterentwicklung der Erfindung vorgesehenen Maßnahmen sind besonders dazu geeignet, die jeweilige Schaltposition für ein entsprechendes Programm gegenüber dem Drehfeldsensor exakt einzustellen. Jede der Schaltstellungen ist dabei durch die Kugelrastung sowohl akustisch als auch fühlbar zu erkennen, so dass der gewählte Programmschritt leicht einzustellen oder zu korrigieren ist.

Die gemäß einer dritten Weiterentwicklung der Erfindung vorgesehene Maßnahme sieht die Anordnung der Rastkugeln im Bedienteil vor, wozu das Führungsteil mit einer Anzahl von den Kugeln angepassten, axialen Vertiefungen in einem beispielsweise kegelstumpfförmigen Einzug in der Blende des Gerätes eingesetzt ist.

Die Doppelkugelrastung hat gegenüber der einfachen Anwendung den Vorteil einer gleichmäßigeren Rastung. Die Anzahl der Vertiefungen ist bei beiden Formen auf die Anzahl der Programmschritte bezogen herzustellen, wobei einem großen Programmumfang ein relativ großer Radius der Rastkontur zugeordnet wird.

Die Montage des drehbaren Bedienteiles ist hierbei durch Zusammendrücken der Kugeln und axiales Einführen in das Führungsteil an entsprechender Position einfach realisierbar.

Der Vorteil gemäß einer vierten Weiterentwicklung besteht als Alternative zu der vorherigen Variante insbesondere darin, dass die Rastkontur einfacher herzustellen ist, weil ihre Vertiefungen am Umfang außenliegend zu bearbeiten sind. Insbesondere ist diese Variante bei kleinem Programmumfang einsetzbar.

Der Vorteil einer fünften Weiterentwicklung der Erfindung besteht darin, dass der Drehfeldsensor gegenüber der Magneteinrichtung exakt justiert werden kann, um somit eine genaue Programmzuordnung zur jeweiligen Stellung des Bedienteiles zu erzielen.

Eine Möglichkeit der Befestigung des Bedienteiles in der Blende des Gerätes ist durch eine sechste Weiterentwicklung der Erfindung dadurch möglich, wenn Teile eines Gewindeganges im Bedienteil mit Teilen eines gleichen Gewindeganges in der Blende korrespondieren. Eine einfache Montage des Bedienteiles an entsprechender Position ähnlich einem Schraubverschluß ist so in einfacher Weise durch seine axiale Einführung in die Rastkontur mit nachfolgend kurzer Drehbewegung realisierbar.

Die gemäß einer siebenten Weiterentwicklung vorgesehene Maßnahme dient sowohl der Drehung des Bedienteiles als auch seiner axialen Fixierung, wobei zwischen den sich in axialer Richtung drehbar gegenüberliegenden Teilen eine angemessene Toleranz vorgesehen ist.

Die nachfolgenden Ausgestaltungen der Erfindung sind in besonderer Weise dazu geeignet, die Funktion des Hauptschalters in die Funktion des Drehwählers zu integrieren. Durch definiert erfolgenden Kontakt des Federelementes an einem der Rückhaltezapfen bei entsprechender Drehung des Bedienteiles mit einem an vorgegebener Position an der Platine angeordnetem Mikrotaster werden über ein Relais die Schaltfunktionen der Spannungsversorgung sowohl "Ein" als auch "Aus" ermöglicht.

Die gemäß einer zehnten und elften Ausgestaltung der Erfindung vorgesehenen Merkmale sind dazu geeignet, die unmittelbare Umgebung des Trägers am Bedienteil und der Blende indirekt zu beleuchten, womit die Erkennbarkeit der jeweiligen Programmstellungen des Drehwählers insbesondere bei ungünstigen Beleuchtungsbedingungen bedeutend verbessert wird.

Die Merkmale der zwölften Ausgestaltung der Erfindung ermöglichen einerseits, die Platine als Teil einer Leiterplatte mit entsprechenden elektrischen Verbindungen zur Leiterplatte vorzusehen oder aber die Leiterplatte selbst direkt mit dem Führungsteil zu verbinden, wodurch die Montage vereinfacht wird.

Weiterhin wird dargestellt, welche Wirkungen der Drehwähler nach der Erfindung bei seiner Anwendung auf die übrigen Steuerungsteile ausübt.

Die Erfindung wird nachfolgend anhand eines Ausführungsbeispieles und anhand von Zeichnungen näher erläutert. In der zugehörigen Zeichnung zeigen
- Figur 1: eine schematische Explosivschnittdarstellung durch einen erfindungsgemäßen Drehwähler und
- Figur 2: eine vereinfachte Darstellung einer Rasteinrichtung mit außenliegender Rastkontur.

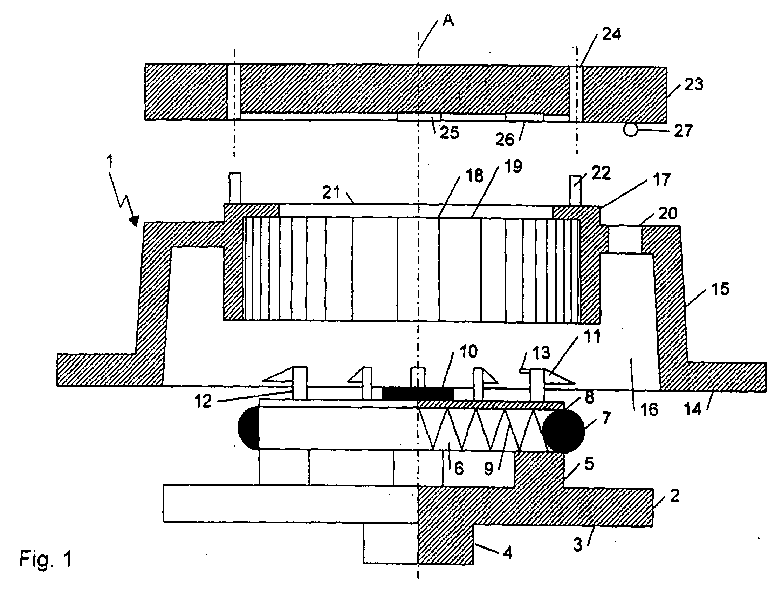

In der Figur 1 der Zeichnung ist ein Drehwähler nach der Erfindung mit der Position 1 gekennzeichnet, der schematisch mit seinen in Explosivdarstetllung gezeichneten Teilen dargestellt ist. Der Einfachheit halber wird im beschriebenen Ausführungsbeispiel auf die an sich erfordelichen elektrischen Verbindungen nicht näher eingegangen.

Gemäß der Figur 1 weist der Drehwähler 1 ein drehbares Bedienteil 2 auf, das einen beispielsweise kreisförmigen Träger 3 mit einem in der Mitte seiner Achse A angeordneten Drehknopf 4 aufweist.

Am Träger 3 sind bei der beschriebenen Ausführung Stege 5 angeordnet, an dem zentrisch ein Rastkörper 6 vorgesehen ist, der hier aus einem hohlzylindrischen Körper gebildet ist.

Der Rastkörper 6 weist wenigstens eine Kugel 7 auf, die in einer in der Wandung eingebrachten Kugelführung 8 m it einem der Kugel 7 angepassten Durchmesser in bekannter Weise gegen ein im Inneren des

Rastkörpers 6 gegenwirkendes Federelement, beispielsweise eine Druckfeder 9, mit definiertem Druck gelagert ist.

In hier beschriebener Ausführung ist eine Doppelkugelrastung mit zwei Kugeln 7 vorgesehen, die in der Wandung des Rastkörpers 6 exakt gegenüberliegend angeordnet und durch Federdruck in der Kugelführung 8 gelagert sind. An in axialer Richtung des Rastkörpers 6 anschließender Fläche ist weiterhin mittig eine an sich bekannte Magneteinrichtung 10 mit einem vorgegebenen Magnetfeld befestigt.

Weiterhin ist auf einem Umfang im Randbereich derselben Fläche eine Anzahl abstandsweise gleichmäßig angeordneter, radial nach außen wirkender, hakenförmig gebildeter Rückhaltezapfen 11 vorgesehen. Der an der Unterseite der nach außen weisenden Hakenform vorgesehene Abstand 12 korrespondiert mit der Dicke des Führungsteils 17 an der betreffenden Stelle. An wenigstens einem der Rückhaltezapfen 11 ist femer an seinem äußeren Ende ein Federelement 13 radial nach innen weisend, angeordnet.

In weiterer Richtung der Achse A ist in einer dem jeweiligen Gerät angepassten Blende 14 als Teil seiner Verkleidung in einer durch eine Einziehung 15 gebildeten Vertiefung 16 ein hohlzylinderförmig gebildetes Führungsteil 17 angeordnet.

Im Inneren des Führungsteiles 17 ist eine Rastkontur 18 eingebracht, deren axial angeordnete, rillenförmig ausgebildeten Vertiefungen 19 der Geometrie der Kugeln 7 des Rastkörpers 6 angepasst sind. Die Anzahl der Vertiefungen 19 ist mit der Anzahl möglicher Schaltstellungen des Drehwählers 1 identisch.

Die Vertiefungen 19 sind somit in Bezug auf Anzahl und Form frei wählbar herzustellen, wodurch verschiedene Programmstufen und darüber hinaus verschiedene Mengen von Programmen je Drehwähler und Gerät in Übereinstimmung mit der zugehörigen Software, beispielsweise nach Kundenwunsch, zur Verfügung gestellt werden können.

In einem ringförmigen Steg zwischen der Einziehung 15 und dem Führungsteil 17 sind ebenfalls ringförmig und abstandsweise zueinander Durchbrüche 20 eingebracht, wodurch eine teilweise geöffnete Verbindung zum Bereich der Einziehung 16 hergestellt ist.

An der zeichnungsgemäß oberen, kreisringförmigen Fläche 21 des Führungsteiles 17 sind in vorliegender Ausführung an definierten Positionen auf gleichem Teilkreis gegenüberliegend angeordnete Führungsstifte 22 vorgesehen.

In gemäß der Zeichnung weiterer axialer Richtung ist eine Platine 23 dargestellt, die beispielsweise kreisscheibenförmig gebildet ist und mit einer nicht dargestellten Leiterplatte für die Aufnahme erforderlicher elektrischer Bauelemente zur Schaltung und Steuerung des Gerätes in Verbindung steht.

Die Platine 23 weist wenigstens eine, vorzugsweise zwei Bohrungen als Führungen 24 auf, die mit den Führungsstiften 22 im Führungsteil 17 als Zentrierungen zu ihrer Lagefixierung korrespondieren.

An der zeichnungsgemäß dargestellten Unterseite der Platine 23 ist in einer zentrischen Ausnehmung mittig der Achse A ein an sich bekannter Drehfeldsensor 25 angeordnet, der mit den bereits erwähnten Mitteln der Leiterplatte elektrisch verbunden ist (nicht dargestellt).

Ferner sind im unteren Randbereich der Platine 23 auf einem definierten Umfang und in einem Abstand zueinander Leuchtmittel, beispielsweise Leuchtdioden 27, angeordnet, die elektrisch mit entsprechender Versorgungseinrichtung verbunden und zur Ausleuchtung beispielsweise jeweils am Träger 3 und an der Blende 14 angebrachter Skalen, vorgesehen sind.

Schließlich befindet sich in der erwähnten Ausnehmung an der Unterseite der Platine 23 ein Mikrotaster 26 an einer derartigen Position, dass dieser in bestimmten Situationen mit dem Federelement 13 des einen Rückhaltezäpfens 11 in Wirkungsverbindung steht. Der Mikrotaster 26 ist hier als geeignete Schalteinrichtung für ein nicht dargestelltes Relais vorgesehen, das im vorliegenden Ausführungsbeispiel der Zu- sowie der Abschaltung der Stromversorgung für ein jeweiliges Gerät der eingangs genannten Art dient.

Die Platine 23 kann beispielsweise als Teil der erwähnten, nicht dargestellten Leiterplatte für die Baugruppen der Steuerung gebildet oder sie kann in einer Leiterplatte integriert sein, welche dann mit dem Führungsteil 17 entsprechend verbunden ist.

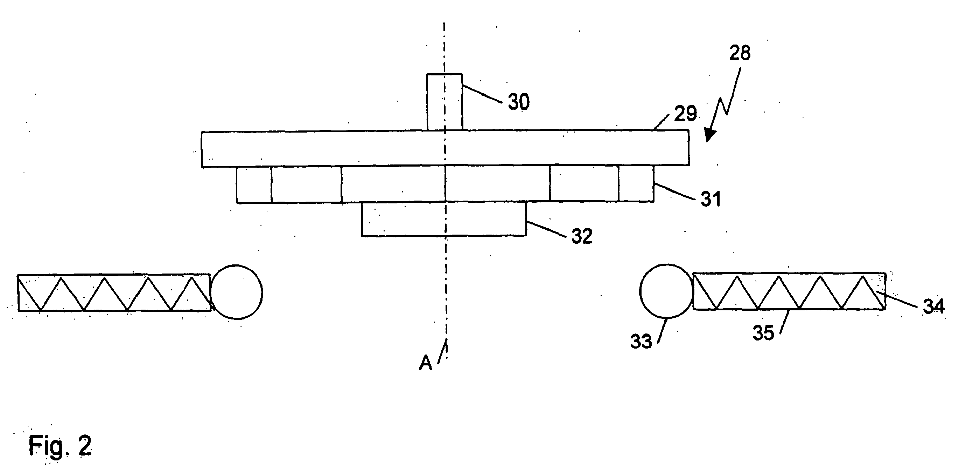

Die Figur. 2 stellt schließlich eine (versetzt gezeichnete) Variante der Doppelkugelrastung des um seine Achse A drehbaren Bedienteiles des Drehwählers 1 dar, das hier mit der Position 28 gekennzeichnet ist, wobei ein Träger 29 und ein Bedienknopf 30 analog der Figur 1 vorgesehen sind.

Entgegen der Darstellung in Figur 1 jedoch befindet sich eine Rastkontur 31 und ein definiert angeordnetes Gewindeteil 32 am Bedienteil 28, während Kugeln 33 mit Federelementen 34 in Federführungen 35 in der hier nicht dargestellten Blende des Gerätes eingebracht sind.

Durch die beschriebene Anordnung ist die Rastkontur 31 einfacher herzustellen, darüber hinaus besteht durch das Gewindeteil 32 eine Vereinfachung der Montage im entsprechenden Gegenstück der Blende, indem das Bedienteil durch eine der jeweiligen Programmvorgabe entsprechenden Position in die entsprechend vorgegebene Öffnung in der Blende "eingeschraubt" und dadurch fixiert wird.

Zur Montage des beschriebenen Drehwählers 1 wird das Bedienteil 2 durch Zusammendrücken der Kugeln 7 am Rastkörper 6 in die Rastkontur 18 des Führungsteiles 17 derart eingesetzt, dass die Rückhaltezapfen 11 die kreisringförmige Fläche 21 am Führungsteil 17 übergreifend kontaktieren.

Dabei ist durch entsprechende Maßnahmen gewährleistet, dass das Bedienteil 2 entsprechend dem Umfang und der Rastung der Kugeln 7 in den Rillen 19 definiert rastend und drehbeweglich gelagert ist.

In Komplettierung des Drehwählers 1 wird die Platine 23 mit Hilfe ihrer Führungen 24 auf den Führungsstiften 22 aufsitzend befestigt, wodurch eine exakte Lagefixierung des Drehfeldsensors 25 gegenüber der abstandsweise drehbeweglich gelagerten Magneteinrichtung 10 gewährleistet ist. Der Mikrotasters 26 befindet sich gegenüber dem Federelement 13 an einem der Rückhaltezapfen 11.

Die erwähnte und nicht näher bezeichnete, zentrische Ausnehmung in der Platine 23 ermöglicht einen Abstand zur Fläche 21 für eine freie Drehbewegung des Bedienteiles 2 mit den Rückhaltezapfen 11, wobei nach der hier beschriebenen Ausführung des Drehwählers 1 bei einer ersten Kontaktierung des Federelementes 13 beispielsweise die Einschaltung und bei einer zweiten Kontaktierung, beispielsweise durch Zurückdrehen des Bedienteiles 2, die Ausschaltung der Stromversorgung über den Mikrotaster 16 erfolgt.

In am Führungsteil 17 angefügtem Zustand der Platine 23 befinden sich die Leuchtdioden 27 im Bereich der Durchbrüche 20, wodurch eine indirekte Beleuchtung der Vertiefung 16, in der Blende 14 im Bereich des scheibenförmigen Trägers 3, beispielsweise zur besseren Erkennung von Programmsymbolen und anderen Informationen, erfolgen kann.

Im Folgenden wird die Wirkungsweise des erfindungsgemäßen Drehwählers kurz beschrieben:

Der Drehwähler 1 dient als Bedienungseinrichtung zur Ein- und Ausschaltung sowie der automatischen Steuerung einer Anzahl unterschiedlicher Programmabläufe von elektrisch betriebenen Geräten, wie Waschmaschinen, Wäschetrocknern, Geschirrspülern oder vergleichbaren Anlagen.

Dazu ist das im Drehwähler 1 drehbar gelagerte Bedienteil 2 mit seiner am Rastkörper 6 angeordneten Magneteinrichtung 10 mit definiert eingestelltem Magnetfeld kontaktfrei mit dem magnetischen Drehfeldsensor 25 verbunden.

Im Drehfeldsensor 25 ist eine Schnittstelle integriert, die der Erkennung eines eingestellten Winkels beziehungsweise einer entsprechenden Position einer Markierung am Bedienteil 2 gegenüber einer anderen Markierung bei seiner definierten Drehung einen winkelabhängigen Code an eine elektronische Auswerte- und Steuereinheit überträgt. Dabei ist einer von der Magneteinrichtung 10 im Drehfeldsensor 25 vorgegebenen Position ein frei bestimmbarer Programmablauf zugeordnet.

Mit dem Drehwähler 1 der beschriebenen Art kann der volle Drehwinkel von 360°C in bekannter Weise in bis zu zweihundertsechsundfünfzig Bitmuster aufgeteilt werden, wobei jedem Bitmuster von der entsprechenden Steuereinheit der erwähnte, jeweilige Programmablauf zugeordnet wird.

Die Vorteile des neuen Drehwählers liegen insbesondere darin, dass bei Nutzung der Merkmale der eingangs erwähnten Lösungen seine Montage und Wartung wesentlich vereinfacht, auf Kundenwünsche besser eingegangen und neben der Vielzahl verschiedenartiger Anwendungen darüber hinaus eine exakte, durch die Rastung fühl- und auch hörbare Anwahl entsprechender, im Übrigen kontaktfrei schaltbarer Programme erfolgen kann.

## Patentansprüche

1. Drehwähler (1) als Bedienungseinrichtung zur kontaktfreien Ein- und Ausschaltung sowie zur automatischen Steuerung einer Anzahl unterschiedlicher Programmabläufe von elektrisch betriebenen Geräten, wie Waschmaschinen, Wäschetrocknern, Geschirrspülern oder vergleichbaren Anlagen, enthaltend ein drehbares Bedienteil (2) mit einer Magneteinrichtung und einen Drehfeldsensor, **dadurch gekennzeichnet, dass** der Drehwähler (1) gebildet ist aus einem Führungsteil (17) mit fixierbarer Platine (23) und dem axial steckbar ausgebildeten, drehbaren Bedienteil (2), wobei das Bedienteil (2) mit Drehknopf (4) einen Rastkörper (6) und die daran axial angeordnete Magneteinrichtung (10) sowie Rückhaltezapfen (11) aufweist, die durch das Führungsteil (17) mit einer dem Rastkörper (6) adäquaten Rastkontur (18) axial fixiert greifen und wobei femer die Magneteinrichtung (10) abstandsweise mit dem an der Platine (23) angeordneten Drehfeldsensor (25) schrittweise definiert drehbar korrespondiert.

2. Drehwähler (1) nach Anspruch 1, **dadurch gekennzeichnet, dass** der Rastkörper (6) des Bedienteiles (2) hohlzylinderförmig ausgebildet ist und eine in seiner als Kugelführung (8) ausgebildeten Wandung eine Kugelrastung mit wenigstens einer gegen ein radial eingesetztes Federelement, beispielsweise eine Druckfeder (9), wirkenden Kugel (7) aufweist.

3. Drehwähler (1) nach Anspruch 1 oder 2, **dadurch gekennzeichnet, dass** der Rastkörper (6) als Doppelkugelrastung mit in der Kugelführung (8) gegen die Druckfeder (9) wirkenden, radial gegenüberliegenden Kugeln (7) ausgebildet ist.

4. Drehwähler (1) nach einem der Ansprüche 1 bis 3, **dadurch gekennzeichnet, dass** das Führungsteil (17) in einer in der Blende (14) eingebrachten Einziehung (16) angeordnet ist und eine zylinderförmige Rastkontur (18) aufweist, die den Kugeln (7) individuell angepasste, axiale Vertiefungen (19) aufweist, deren Anzahl der Menge zu steuernder Arbeits- und Programmschritte individuell anpassbar ist.

5. Drehwähler (1) nach Anspruch 1, **dadurch gekennzeichnet, dass** wenigstens eine, vorzugsweise zwei gegenüberliegende Kugeln (33) mit Federelementen (34) in radialen Federführungen (35) in der Blende (14) angeordnet sind, die mit einer entsprechenden Rastkontur (31) am Bedienteil (28) korrespondieren.

6. Drehwähler (1) nach einem der Ansprüche 1 bis 5, **dadurch gekennzeichnet, dass** die Platine (23) mit mittig ihrer Achse (A) angeordnetem und als Hall-Element ausgebildetem Drehfeldsensor (25) Führungen (24) aufweist, die mit Führungsstiften (22) am Führungsteil (17) für ihre stirnseitige Lagefixierung korrespondieren.

7. Drehwähler (1) nach Anspruch 5, **dadurch gekennzeichnet, dass** am Bedienteil (28) zu seiner Montage Teile eines auf seinem Umfang versetzt angeordneten Gewindeganges (32) vorgesehen sind, die mit Teilen eines entsprechenden Gewindeganges in der Blende (14) in Wirkungsverbindung bringbar sind.

8. Drehwähler (1) nach einem der vorhergehenden Ansprüche, **dadurch gekennzeichnet, dass** die Rückhaltezapfen (22) zur axialen Drehlagefixierung des Bedienteiles (2) mit einer geeigneten, ringförmigen Fläche (21) am Führungsteil (17) in Verbindung stehen.

9. Drehwähler (1) nach einem der vorhergehenden Ansprüche, **dadurch gekennzeichnet, dass** an einem der Rückhaltezapfen (11) ein Hebel, beispielsweise ein Federelement (13), derart angebracht ist, dass es mit einem an der Platine (23) angeordneten Mikrotaster (26) in einer definierten Position des Bedienteiles (2) in Verbindung steht.

10. Drehwähler (1) nach Anspruch 9, **dadurch gekennzeichnet, dass** der Mikrotaster (26) mit einem Relais zur Zuschaltung und Abschaltung der Stromversorgung verbunden ist.

11. Drehwähler (1) nach einem der Ansprüche 1 bis 10, **dadurch gekennzeichnet, dass** an geeigneter Position an der Platine (23) gegenüber dem Führungsteil (17) ringförmig eine Anzahl Leuchtmittel, beispielsweise Leuchtdioden (27), angeordnet ist.

12. Drehwähler (1) nach Anspruch 11, **dadurch gekennzeichnet, dass** die Leuchtdioden (27) so angeordnet sind, dass in Verbindung mit kreisförmig angeordneten Durchbrüchen (20) im Bereich der vorzugsweise kegelstumpfförmigen Einziehung (15) die Vertiefung (16) in der Blende (14) indirekt ausleuchtbar ist.

13. Drehwähler (1) nach einem der Ansprüche 1 bis 12, **dadurch gekennzeichnet, dass** die Platine (23) als Teil einer erforderliche elektronische Bauelemente tragenden Leiterplatte oder als Leiterplatte ausgebildet ist, wobei die Platine (23) als Teil der Leiterplatte mit derselben elektrisch verbunden ist.

14. Drehwähler (1) nach einem der Ansprüche 1 bis 13, **dadurch gekennzeichnet, dass** die Magneteinrichtung (10) über ihr Magnetfeld mit dem magnetischen Drehfeldsensor (25) in Hall-Technologie oder einer ähnlichen Technologie verbunden ist und dass im Drehfeldsensor (25) eine Schnittstelle integriert ist, über die ein winkelabhängiger Code an eine elektronische Auswerte- und Steuereinheit übertragen wird und dass ferner zur winkelgenauen Positionierung eines der Bedienteile (2; 28) vorgesehen ist, wobei einer Position des Drehfeldsensors (25) in einer Schaltstellung eines Bedienteiles (2; 28) ein Programmablauf zugeordnet ist und dass durch die Hall-Technologie oder eine ähnlichen Technologie berührungslos die jeweilige Schaltstellung realisiert wird.

## Claims

1. Rotary switch (1) as control device for contact-free switching on and switching off as well as for automatic control of a number of different program sequences of electrically operated appliances, such as washing machines, laundry driers, dishwashers or comparable installations, comprising a rotatable control part (2) with a magnet device and a rotational field sensor, **characterised in that** the rotary switch (1) is formed from a guide part (17) with a fixable plate (23) and the rotatable control part (2) constructed to be able to plugged on axially, wherein the control part (2) with rotary knob (4) has a detent body (6) and the magnet device (10), which is axially arranged thereat, as well as retaining pins (11), which engage in axially fixing manner through the guide part (17) with a detent contour (18) adequate for the detent body (6) and wherein in addition the magnet device (10) corresponds at a spacing with the rotational field sensor (25), which is arranged at the plate (23), to be rotatable in defined manner in steps.

2. Rotary switch (1) according to claim 1, **characterised in that** the detent body (6) of the control part (2) is of hollow cylindrical form and has in its wall, which is formed as a ball guide (8), a ball detent with at least one ball (7) acting against a radially inserted spring element, for example a compression spring (9).

3. Rotary switch (1) according to claim 1 or 2, **characterised in that** the detent body (6) is constructed as a double ball detent with radially opposite balls (7) acting in the ball guide (8) against the compression spring (9).

4. Rotary switch (1) according to one of claims 1 to 3, **characterised in that** the guide part (17) is arranged in a drawn-in portion (16), which is formed in the control panel (14), and has a cylindrical detent profile (18), which has axial depressions (19), which are individually adapted to the balls (7) and the number of which is individually adaptable to the number of operating and program steps to be controlled.

5. Rotary switch (1) according to claim 1, **characterised in that** at least one, preferably two opposite balls (33) with spring elements (24) are arranged in radial spring guides (25) in the control panel (14), which balls correspond with a corresponding detent profile (31) at the control panel (28).

6. Rotary switch (1) according to one of claims 1 to 5, **characterised in that** the plate (23) with rotational field sensor (25) arranged centrally with respect to its axis (A) and constructed as a Hall element has guides (24) corresponding with guide pins (22) at the guide part (17) for positional fixing thereof at the end face.

7. Rotary switch (1) according to claim 5, **characterised in that** provided at the control part (28) for mounting thereof are parts of a thread (32), which thread is arranged to be offset on the circumference of the control part and which parts can be brought into operative connection with parts of a corresponding thread in the control panel (14).

8. Rotary switch (1) according to one of the preceding claims, **characterised in that** the retaining pins (22) for axial rotational positional fixing of the control part (2) are disposed in connection with a suitable annular surface (21) at the guide part (17).

9. Rotary switch (1) according to one of the preceding claims, **characterised in that** a lever, for example a spring element (13), is mounted at one of the retaining pins (11) in such a manner that it is disposed in connection with a microswitch (26), which is arranged at the plate (23), in a defined position of the control part (2).

10. Rotary switch (1) according to claim 9, **characterised in that** the microswitch (26) is connected with a relay for switching on and switching off the current supply.

11. Rotary switch (1) according to one of claims 1 to 10, **characterised in that** a number of lighting means, for example light-emitting diodes (27), is arranged annularly at a suitable position at the plate (23) opposite the guide part (17).

12. Rotary switch (1) according to claim 11, **characterised in that** the light-emitting diodes (27) are so arranged that in conjunction with circularly arranged passages (20) in the region of the preferably frusto-conical drawn-in portion (15) the depression (16) in the panel (14) can be indirectly illuminated.

13. Rotary switch (1) according to one of claims 1 to 12, **characterised in that** the plate (23) is constructed as part of a circuitboard, which carries necessary electronic components, or as a circuitboard, wherein the plate (23) as part of a circuitboard is electrically connected with the same.

14. Rotary switch (1) according to one of claims 1 to 13, **characterised in that** the magnet device (10) is connected by way of its magnetic field with the magnetic rotational field sensor (25) in Hall technology or a similar technology and that integrated in the rotational field sensor (25) is an interface by way of which an angle-dependent code is transmitted to an electronic evaluating and control unit and in addition is provided for angularly precise position of one of the control parts (2; 28), wherein a position of the rotational field sensor (25) in one switch setting of a control part (2; 28) is associated with the program sequence and that the respective switch setting is contactlessly realised by the Hall technology or a similar technology.

## Revendications

1. Sélecteur rotatif (1) servant de dispositif de commande pour enclencher et désenclencher sans contact ainsi que pour commander automatiquement un nombre de différents déroulements de programmes d'appareils commandés électriquement, tels que lave-linge, sèche-linge, lave-vaisselle ou installations similaires, comprenant un élément de commande (2) rotatif doté d'un dispositif magnétique et d'un capteur à champ tournant, **caractérisé en ce que** le sélecteur rotatif (1) est formé par une pièce de guidage (17) dotée d'une platine (23) fixable et par l'élément de commande (2) rotatif formé pour pouvoir être enfiché axialement, la pièce de commande (2) avec le bouton tournant (4) présentant un corps à crans (6) et le dispositif magnétique (10) disposé axialement par rapport à ce dernier, ainsi que des tourillons de retenue (11) qui ont prise axialement à travers la pièce de guidage (17) en étant fixés axialement avec un contour d'enclenchement (18) adapté au corps à crans (6), et le dispositif magnétique (10) correspondant en outre, avec écart et en tournant de manière définie par étapes, au capteur à champ tournant (25) disposé sur la platine (23).

2. Sélecteur rotatif (1) selon la revendication 1, **caractérisé en ce que** le corps à crans (6) de la pièce de commande (2) est en forme de cylindre creux et présente un cran d'arrêt à billes formé dans sa paroi exécutée comme glissière à billes (8) comprenant au moins une bille (7) agissant contre un élément à ressort inséré radialement, par exemple un ressort de pression (9).

3. Sélecteur rotatif (1) selon la revendication 1 ou 2, **caractérisé en ce que** le corps à crans (6) est formé comme un cran d'arrêt à deux billes comprenant des billes (7) opposées radialement, agissant contre le ressort de pression (9) dans la glissière à billes (8).

4. Sélecteur rotatif (1) selon l'une quelconque des revendications 1 à 3, **caractérisé en ce que** la pièce de guidage (17) est disposée dans un rétrécissement (16) inséré dans le bandeau (14) et présente un contour d'enclenchement (18) de forme cylindrique qui présente des renfoncements (19) axiaux, adaptés individuellement aux billes (7), dont le nombre est adaptable individuellement à la quantité d'étapes de travail et de programmes à commander.

5. Sélecteur rotatif (1) selon la revendication 1, **caractérisé en ce qu'**au moins une, de préférence deux, billes (33) opposées sont disposées avec des éléments à ressort (34) dans des guidages à ressort radiaux (35) dans le bandeau (14), et qui correspondent à l'élément de commande (28) avec un contour d'enclenchement (31) correspondant.

6. Sélecteur rotatif (1) selon l'une quelconque des revendications 1 à 5, **caractérisé en ce que** la platine (23) présente des guidages (24) avec un capteur à champ tournant (25) disposé au centre de son axe (A) et formé comme un élément de Hall, lesquels guidages correspondent à des tiges de guidage (22) sur la pièce de guidage (17) pour son blocage frontal.

7. Sélecteur rotatif (1) selon la revendication 5, **caractérisé en ce que** des pièces d'un pas de vis (32), disposé de manière décalée sur son pourtour, sont prévues sur l'élément de commande (28) pour son montage, lesquelles peuvent être mises en liaison active avec des pièces d'un pas de vis correspondant dans le bandeau (14).

8. Sélecteur rotatif (1) selon l'une quelconque des revendications précédentes, **caractérisé en ce que** les tourillons de retenue (22) destinés à la fixation de la position tournante axiale de l'élément de commande (2) sont en liaison avec une surface annulaire (21) appropriée à la pièce de guidage (17).

9. Sélecteur rotatif (1) selon l'une quelconque des revendications précédentes, **caractérisé en ce qu'**un levier, par exemple un élément à ressort (13), est installé sur l'un des tourillons de retenue (11) de telle sorte qu'il est en liaison avec un micropalpeur (26) disposé sur la platine (23), dans une position définie de l'élément de commande (2).

10. Sélecteur rotatif (1) selon la revendication 9, **caractérisé en ce que** le micropalpeur (26) est relié à un relais de mise sous et hors tension de l'alimentation en courant.

11. Sélecteur rotatif (1) selon l'une quelconque des revendications 1 à 10, **caractérisé en ce qu'**un nombre de moyens d'éclairage, par exemple des diodes lumineuses (27), est disposé de manière annulaire à une position adaptée de la platine (23) à l'opposé de la pièce de guidage (17).

12. Sélecteur rotatif (1) selon la revendication 11, **caractérisé en ce que** les diodes lumineuses (27) sont disposées de telle sorte que le renfoncement (16) dans le bandeau (14) peut être éclairé indirectement en liaison avec des passages (20) disposés de manière circulaire dans la zone du rétrécissement (15) de préférence en forme de cône tronqué.

13. Sélecteur rotatif (1) selon l'une quelconque des revendications 1 à 12, **caractérisé en ce que** la platine (23) est formée comme une partie d'un circuit imprimé portant les éléments électroniques nécessaires ou comme circuit imprimé, la platine (23) étant raccordée électriquement au circuit imprimé comme partie de celui-ci.

14. Sélecteur rotatif (1) selon l'une quelconque des revendications 1 à 13, **caractérisé en ce que** le dispositif magnétique (10) est relié au capteur à champ tournant (25) via son champ magnétique, par technique de Hall ou une technique similaire, et **en ce qu'**une interface est intégrée dans le capteur à champ tournant (25), laquelle permet de transmettre un code dépendant de l'angle à une unité de commande et d'évaluation électronique, et **en ce qu'**en outre on prévoit l'un des éléments de commande (2, 28) pour le positionnement en angle exact, un déroulement de programme étant associé à une position du capteur à champ tournant (25) dans une position de commutation d'un élément de commande (2), et **en ce que** la position de commutation respective est réalisée sans contact par technique de Hall ou une technique similaire.
